# FASCICULE DE BREVET EUROPEEN

(11) **EP 3 408 504 B1**
(45) Date de publication et mention de la délivrance du brevet: **22.04.2020**
(21) Numéro de dépôt: 17706587.7
(22) Date de dépôt: 27.01.2017
(51) Int. Cl.: F01D 15/12, F01D 25/18

(54) **ROUET DE DISTRIBUTION D'HUILE AVEC PARTITIONNEMENT AXIAL ET RÉDUCTEUR A TRAIN ÉPICYCLOIDAL EQUIPÉ D'UN TEL ROUET**
SICH DREHENDER ÖLVERTEILER MIT AXIALER PARTITIONIERUNG UND PLANETEN-UNTERSETZUNGSGETRIEBE MIT EINEM SOLCHEN ÖLVERTEILER
SPINNING OIL DISTRIBUTOR WITH AXIAL PARTITIONING AND PLANETARY REDUCTION GEAR WITH SUCH A DISTRIBUTOR

(30) Priorité: 28.01.2016 FR 1650696
(43) Date de publication de la demande: 05.12.2018
(73) Titulaire: Safran Transmission Systems, 92700 Colombes (FR)
(72) Inventeur: GEDIN, Patrice, 77550 Moissy-Cramayel (FR); AUTRAN, Pauline, Marie, Cecille, 77550 Moissy-Cramayel (FR); BRUOT, Cécile, 77550 Moissy-Cramayel (FR); BECK, Guillaume, Julien, 77550 Moissy-Cramayel (FR); DOMBEK, Alexis, 77550 Moissy-Cramayel (FR); LEMOINE, Julie, 77550 Moissy-Cramayel (FR); PELTIER, Jordane, 77550 Moissy-Cramayel (FR)
(74) Mandataire: Pichat, Thierry
(86) Numéro de dépôt international: PCT/FR2017/050200
(87) Numéro de publication internationale: WO 2017/129926

(56) Documents cités:
- WO-A1-2010/092263
- US-A1- 2013 225 353

## Description

La présente invention concerne notamment un rouet de distribution de lubrifiant dans une turbomachine et un réducteur de vitesse à train épicycloïdal, destiné à équiper notamment un turbopropulseur ou turboréacteur d'avion.

Un réducteur de vitesse est typiquement constitué principalement d'un planétaire interne (également appelé solaire) entraîné par un arbre d'entrée, par exemple un arbre de turbine, un planétaire externe (également appelé couronne), coaxial au planétaire interne, des satellites engrenant à la fois avec le planétaire interne et avec le planétaire externe, et un porte-satellites sur lequel les satellites sont montés rotatif.

La variation du rapport de réduction d'un tel réducteur s'obtient par la modification du nombre de dents du solaire, des satellites et de la couronne externe, et par l'architecture du réducteur.

Dans des turbomachines, on connaît des rouets de distribution de lubrifiant présentant un axe autour duquel s'étend une cavité annulaire :
- ouverte radialement vers l'axe,
- limitée latéralement par une première et une seconde parois sensiblement radiales audit axe, pour recevoir le lubrifiant,
- et d'où partent au moins des premières et des secondes canalisations d'alimentation en lubrifiant de divers organes à lubrifier.

Dans WO 2010/092263, parallèlement à l'axe autour duquel s'étend la cavité annulaire à lubrifiant, cette cavité est scindée en au moins une première et une seconde sous-cavités annulaires, lesquelles:
-- sont séparées par une cloison interne annulaire sensiblement radiale audit axe,
-- et communiquent avec les premières et secondes canalisations, respectivement.

Une problématique réside dans l'alimentation en pression de ces organes à lubrifier. Ceci est notamment vrai quand lesdits organes sont situés dans le champ tournant (tels des paliers et des dentures du réducteur), et alimentés à partir d'une pompe située dans un repère fixe. De plus, la répartition des besoins en lubrifiant est différente suivant les phases de fonctionnement du réducteur. Et, pour limiter les pertes il est nécessaire de lubrifier au plus près possible du besoin chacun des organes concernés, ce qui invite à chercher à ajuster la répartition du lubrifiant.

L'invention a notamment pour but de proposer une solution de rouet qui favorise un tel ajustement, tout en permettant cette alimentation en pression des organes à lubrifier.

A cette fin, il est d'abord proposé que, sur ce rouet, la cavité annulaire précitée présente une capacité de débordement à l'endroit de ladite cloison interne, de sorte qu'un débordement de lubrifiant peut avoir lieu, parallèlement audit axe, de la première sous-cavité dans la seconde, et inversement.

Monté sur un réducteur épicycloïdal ou sur un dispositif d'alimentation en huile comme ci-après, ce rouet vise à permettre tout ou partie des avantages suivants :
- assurer une lubrification sans pièce de liaison entre les circuits liés au repère fixe et ceux liés au porte-satellites typiquement prévu sur le réducteur, d'où des avantages de coût et fiabilité,
- transférer le lubrifiant (typiquement l'huile) d'un repère fixe vers le repère tournant sans pièce d'usure, d'où à nouveau de la fiabilité,
- autoriser un montage modulaire du réducteur dans le moteur, d'où un gain sur la maintenance,
- répartir le lubrifiant entre les différents éléments du réducteur, et de faire varier cette répartition suivant les phases de fonctionnement du réducteur, d'où une optimisation de la lubrification, une amélioration du rendement, et une possible limitation de la masse globale du moteur (moins de lubrifiant utilisé donc embarqué),
- assurer la lubrification du réducteur en cas de disfonctionnement d'un des systèmes d'alimentation (ex: gicleur bouché, débit trop élevé, etc...), d'où encore de la fiabilité.

En relation avec ce qui précède, il est d'ailleurs conseillé que, sur le rouet, radialement à son axe :
- les première et seconde sous-cavités présentent chacune un fond,
- et que sa cloison interne présente, par rapport à chaque fond, une hauteur inférieure à celles des première et secondes parois.

Ceci facilitera l'obtention du débordement attendu, via une réalisation simple de ladite capacité de débordement à l'endroit de la cloison interne.

Concernant le dispositif précité prévu pour une alimentation en huile d'un ensemble de pignons engrenant les uns sur les autres en étant mobiles en rotation autour d'un axe de rotation commun (X), il est conseillé que ce dispositif comprenne :
- un réservoir d'huile de lubrification,
- au moins une canalisation fixe d'amenée de l'huile au niveau dudit ensemble et des canalisations d'acheminement de l'huile au niveau des engrenages tournants, lesdites canalisations d'acheminement étant également mobiles en rotation autour de l'axe de rotation commun (X),
- au moins un moyen d'éjection de l'huile à l'extrémité de la canalisation fixe d'amenée,
- et le rouet ci-avant, avec toutes les caractéristiques prescrites par la revendication 1, celui-ci étant mobile en rotation autour de l'axe de rotation commun (X) et positionné en regard dudit moyen d'éjection, pour recevoir l'huile.

Est aussi concerné un réducteur de vitesse à train épicycloïdal en tant que tel, adapté à tourner autour dudit axe de rotation commun (X) et comprenant :
- l'ensemble précité de pignons engrenant les uns sur les autres, et
- le dispositif précité d'alimentation en huile.

Sur ce réducteur, il sera préféré que la cloison interne du rouet considéré soit plus éloignée de l'axe de rotation (X) que les première et seconde parois latérales de ce rouet, de sorte qu'un débordement de lubrifiant puisse avoir lieu, préférentiellement d'une sous-cavité à l'autre plutôt que vers l'extérieur, parallèlement audit axe, de la première sous-cavité dans la seconde, et inversement.

Les avantages sont parmi ceux déjà cités.

Tout ou partie de ce qui précède permettra en outre de réaliser :
- un module de soufflante de turboréacteur double flux comprenant un arbre fan entraîné par un réducteur de vitesse perfectionné, comme ci-avant,
- et/ou une turbomachine (moteur) comportant au moins un tel réducteur de vitesse.

Est encore concerné par l'invention un procédé de fonctionnement du dispositif d'alimentation en huile précité.

Suivant ce procédé, il est prévu :
- d'alimenter en huile la cavité annulaire du rouet via le moyen d'éjection d'huile de sorte qu'une répartition initiale d'huile lubrifiante s'opère dans la cavité du rouet par l'intermédiaire de la cloison interne, et qu'un ou des niveau(x) d'huile se crée(nt) en conséquence dans lesdites première et seconde sous-cavités,
- puis de suralimenter une desdites première et seconde sous-cavités jusqu'à faire déborder l'huile à l'endroit de la cloison interne, dans l'autre desdites première et seconde sous-cavités du rouet.

Dans certaines situations de fonctionnement, la consommation en lubrifiant est supérieure à celles d'autres moments. En outre, on peut souhaiter éviter le barbotage des organes lubrifiés par le rouet considéré.

Aussi est-il par ailleurs possible, dans une situation donnée, de poursuivre une suralimentation d'au moins une desdites première et seconde sous-cavités jusqu'à les faire déborder vers l'extérieur du rouet.

Pour une efficacité de fonctionnement du système de lubrification à rouet, on recommande par ailleurs que, pour alimenter et suralimenter en huile la cavité annulaire du rouet, on entraîne en rotation ce rouet et qu'on crée une pression centrifuge dans sa cavité en fonction de la vitesse de rotation du rouet et de la hauteur de la colonne d'huile dans ladite cavité.

L'invention sera si nécessaire encore mieux comprise et de possibles autres détails, caractéristiques et avantages de l'invention pourront apparaître à la lecture de la description suivante faite à titre d'exemple non limitatif en référence aux dessins annexés dans lesquels :
- la figure 1 montre un principe de turboréacteur double flux,
- la figure 2 montre un réducteur de vitesse de rotation de l'arbre fan, à train épicycloïdal, équipé d'un système de lubrification selon une réalisation possible, avec détails de l'acheminement du lubrifiant vers le réducteur et dans celui-ci ; le rouet étant sans le perfectionnement de l'invention,

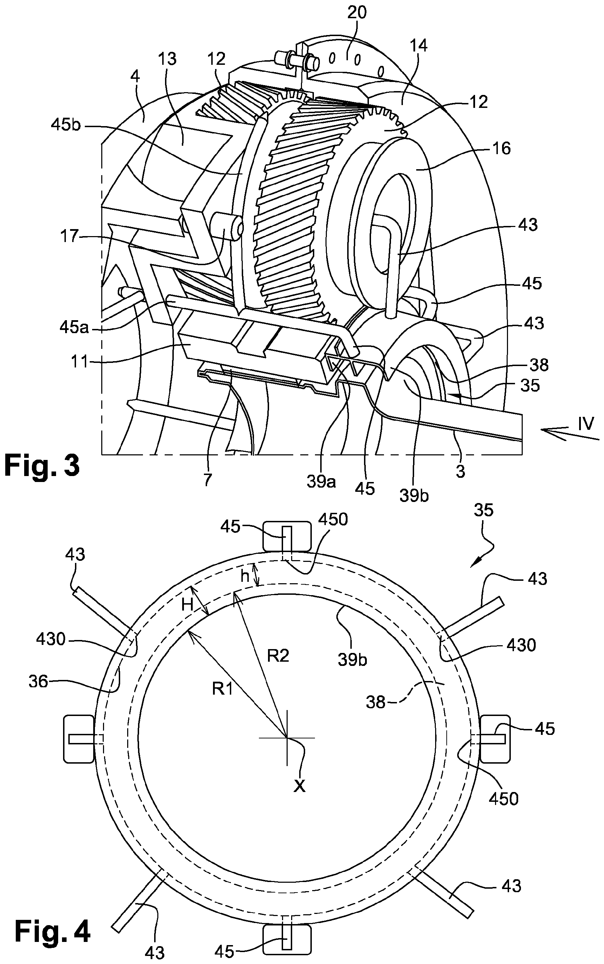

- la figure 3 est une vue en perspective et en coupe axiale, du réducteur ci-dessus, avec le perfectionnement de l'invention sur le rouet,
- la figure 4 est une vue de côté suivant la flèche IV, et
- les figures 5-7 montrent trois états de remplissage du rouet ci-dessus.

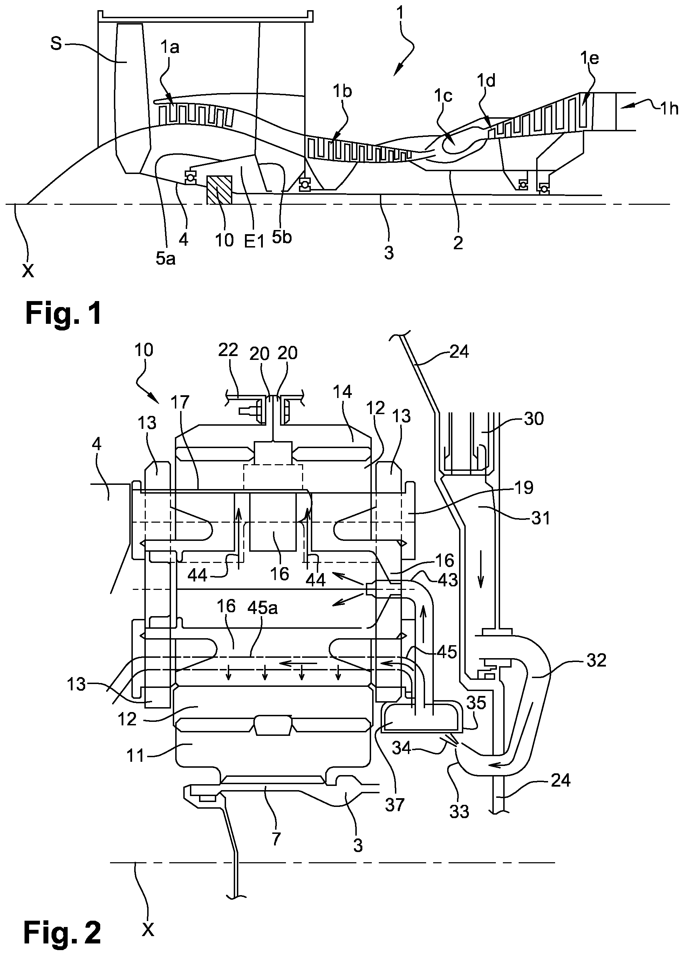

En se référant à la figure 1, on voit une turbomachine 1, tel ici qu'un turboréacteur, qui comporte de manière classique, globalement et successivement le long de l'axe longitudinal X de la turbomachine, une soufflante S, un compresseur basse pression 1a, un compresseur haute pression 1b, une chambre de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression le sont reliés par un arbre basse pression 3 et forment avec lui un corps basse pression (BP). Dans la configuration représentée qui concerne un turbofan classique, le disque sur lequel sont montées les aubes de la soufflante S est entraîné par un arbre fan 4, ou tourillon BP, qui est lui-même entraîné directement par l'arbre BP 3, au travers d'un réducteur 10 à train épicycloïdal.

L'axe longitudinal X est l'axe de rotation X de la turbomachine (autour duquel tournent notamment les aubes mobiles de la soufflante S, des compresseurs et des turbines). Ce qui est ici « radial » l'est par rapport à cet axe X.

Les aubes de la soufflante S sont portées par l'arbre fan 4 qui est relié à la structure du moteur. Cet arbre fan est fixé à son extrémité aval sur le porte-satellites 13 du réducteur 10. De son côté l'arbre BP 3 est relié au planétaire 11 du réducteur 10 par ses cannelures 7.

La figure 2 montre cela et plus généralement, en demi-coupe radiale la partie supérieure du réducteur 10, la partie inférieure étant située symétriquement par rapport à l'axe de rotation X.

Comme illustré, le réducteur 10 est fixé, par l'intermédiaire de brides de fermeture et de support 20 qui s'étendent à partir de la couronne du train épicycloïdal, à une des extrémités d'un carter de support 22, qui assure ainsi le maintien en place du réducteur sur l'arbre fan 2 et son positionnement par rapport à l'arbre BP 3.

L'enceinte du réducteur 10 est pressurisée dans un carter 24. Le carter de pressurisation 24 a pour objet de créer une enceinte autour du réducteur qui soit à une pression supérieure à celle qui l'environne, celle-ci étant mise en dépression par une pompe d'aspiration de l'huile du réducteur 10. Le carter 24 entoure le carter de support 22.

Le réducteur 10 est enfermé extérieurement dans sa couronne 14, qui n'est pas mobile en rotation et qui est fixée sur la structure du moteur au niveau des brides 20. Le réducteur embraye, d'une part, sur des cannelures 7 de l'arbre BP 3 par l'intermédiaire des pignons d'engrenage du planétaire 11 du train épicycloïdal, et d'autre part sur l'arbre fan 4 qui est rattaché au porte-satellites 13 de ce même train épicycloïdal. Classiquement le pignon solaire 11 entraîne une série de pignons satellites 12 qui sont répartis régulièrement sur la circonférence du réducteur. Ces satellites 12 tournent eux aussi autour de l'axe X, en roulant sur la couronne 14 qui est rattachée à la structure de la turbomachine par le carter de support 22. Au centre de chaque satellite est positionné un axe de satellite 16 relié à un porte-satellites 13, le satellite tournant librement autour de cet axe à l'aide d'un palier, comme illustré. La rotation des satellites autour de leur axe, du fait de la coopération de leurs pignons avec ceux de la couronne 14, entraîne la rotation du porte-satellites 13 autour de l'axe X, et par conséquent celle de l'arbre fan 4 qui lui est lié. L'entraînement de l'arbre fan 4 par le porte-satellites 13 est assuré par une série de doigts de centrage 17 qui s'étendent axialement de l'extrémité aval de l'arbre fan 4. Le porte-satellites 13 s'étend symétriquement de part et d'autre du réducteur pour former une enceinte dans laquelle pourra être mise en œuvre une fonction de lubrification. Des douilles 19 complètent la fermeture de cette enceinte en l'obturant au niveau des axes de satellites 16, de chaque côté du réducteur.

Des flèches montrent sur la figure 2 le cheminement suivi par l'huile depuis un réservoir d'huile spécifique, dit réservoir tampon 31, jusqu'aux pignons et aux paliers à lubrifier. Le réservoir tampon 31 est positionné à côté du réducteur, en partie haute de façon que l'huile puisse s'écouler vers le centre du réducteur par gravité. Ce réservoir 31 est alimenté par une canalisation 30, en provenance d'un réservoir principal (non représenté). Du réservoir tampon 31 l'huile débouche dans au moins un injecteur 32 pourvu d'au moins un gicleur 33. L'huile sort du gicleur sous la forme d'un jet 34, qui se forme sous la pression produite conjointement par la pression de la pompe d'alimentation et par le poids de la colonne d'huile située au-dessus de lui. Ce jet 34 est orienté avec une composante radiale dirigée vers l'extérieur du moteur et aboutit dans un rouet de distribution d'huile 35.

Le rouet 35 forme une cavité de retenue de l'huile du jet 34. Cette huile est entraînée en rotation par le rouet 35 dans le fond duquel elle est mise en pression sous l'action de la force centrifuge. Du fond du rouet partent, respectivement en 430 et 450, une série de canalisations pour l'alimentation en huile des divers organes à lubrifier. Ces canalisations, telles que représentées à partir de la figure 2, comprennent :
- une première série de canalisations 43, en nombre égal à celui des pignons satellites 12, qui après le rouet pénètrent dans l'enceinte interne de chaque arbre de satellite 16, laquelle est refermée par le porte-satellites 13,
- et une seconde série de canalisations 45, qui, comme les premières, sont réparties régulièrement sur la périphérie du réducteur et, après le rouet 35, passent dans l'espace situé entre deux pignons satellites 12 consécutifs.

L'huile qui circule dans les premières canalisations 43 pénètre dans la cavité interne de chaque axe de satellite 16. La force centrifuge l'entraîne dans des canaux de guidage 44 qui traversent radialement ces axes. Ces canaux 44 débouchent à la périphérie des axes de satellites 16, au niveau de leurs paliers supportant les satellites 12 et assurent ainsi la lubrification de ces paliers. Les secondes canalisations 45 cheminent, depuis le fond du rouet 35 entre les satellites 12 et se divisent en plusieurs canaux 45a, 45b qui acheminent l'huile vers les engrenages formés par, d'une part, les pignons des satellites 12 et ceux du planétaire 11 et, d'autre part, les pignons des satellites 12 et ceux de la couronne 14. Chaque canal 45a s'étend axialement le long du pignon satellite, entre le pignon satellite 12 et le planétaire 11. La canalisation 45b, qui alimente l'engrenage entre la couronne 11 et les satellites 12, projette son huile au centre du cylindre formé par chaque satellite.

Fonctionnellement, l'huile va s'écouler par gravité depuis le réservoir tampon 31 dans l'injecteur 32. Sous la pression de la pompe d'alimentation et de la colonne d'huile située au-dessus du (des) gicleur(s) 33, l'huile est éjectée et récupérée par le rouet tournant 35 dans lequel elle se répand. Elle passe ensuite dans les premières et secondes canalisations 43 et 45 de chaque satellite 12. L'huile qui passe par la première canalisation 43 pénètre dans la cavité interne du pignon satellite 12 correspondant et est alors soumise simultanément au champ de forces centrifuges précédent et au champ dû à la rotation du pignon satellite autour de son axe de satellite 16. Elle traverse l'épaisseur du pignon satellite 12 grâce aux canaux de guidage 44 et vient lubrifier le palier situé entre le satellite 12 et son axe de satellite 16. Le champ d'accélération centrifuge donne lieu à un gradient de pression le long du tuyau et que ce gradient se traduit par une pression suffisamment importante (environ 5 bars) au niveau du palier pour pouvoir l'alimenter. De son côté, l'huile qui passe par la seconde canalisation 45, se divise entre la seconde canalisation 45a d'alimentation du planétaire et la seconde canalisation 45b d'alimentation de l'engrenage satellite-couronne. La canalisation 45a éjecte de l'huile sur toute la largeur des deux pignons grâce à sa rampe de lubrification. La canalisation 45b remonte le long du pignon satellite jusqu'au niveau de son engrenage sur la couronne 14 et se termine par un gicleur qui lubrifie ce dernier.

Ainsi, les moyens de lubrification seront aptes à assurer l'amenée de lubrifiant depuis une zone radialement interne du rouet 35 jusqu'aux dentures et paliers correspondants.

Le rouet 35 est ici une coupelle cylindrique à section radiale en U, dont l'ouverture du U est orientée en direction de l'axe de rotation X. Alors que l'(chaque) injecteur 32 et son gicleur 33 sont fixes, le rouet 35 est mobile en rotation autour de l'axe X. L'ouverture du fond en U du rouet 35 se situe en face de l'axe de rotation X et du gicleur, et les bords du U sont orientés en direction de cet axe.

L'axe du rouet autour duquel s'étend sa cavité annulaire interne 37 est donc l'axe X. Et la cavité 37 est donc ouverte radialement vers l'axe, X et limitée latéralement par une première et une seconde parois 39a,39b sensiblement radiales audit axe, pour recevoir le lubrifiant.

Les premières et des secondes canalisations 43,45 d'alimentation en lubrifiant des paliers et dentures partent de la cavité 37, comme illustré. Et, parallèlement à l'axe X, la cavité 37 est scindée en des sous-cavités annulaires 40a,40b, ici au nombre de deux. Ces première et seconde sous-cavités sont séparées par une cloison interne annulaire 38 sensiblement radiale à l'axe X et communiquent avec les premières et secondes canalisations, respectivement.

La cloison interne présente, par rapport aux fonds 41a,41b respectifs des sous-cavités (ces fonds étant limités latéralement par les première et seconde parois), une hauteur h inférieure à celles (ici identiques, H) des première et secondes parois 39a,39b.

En d'autres termes, le rayon R1 suivant lequel s'étend circonférentiellement l'extrémité libre de chaque paroi latérale 39a ou 39b est inférieur au rayon R2 suivant lequel s'étend circonférentiellement l'extrémité libre de la cloison 38.

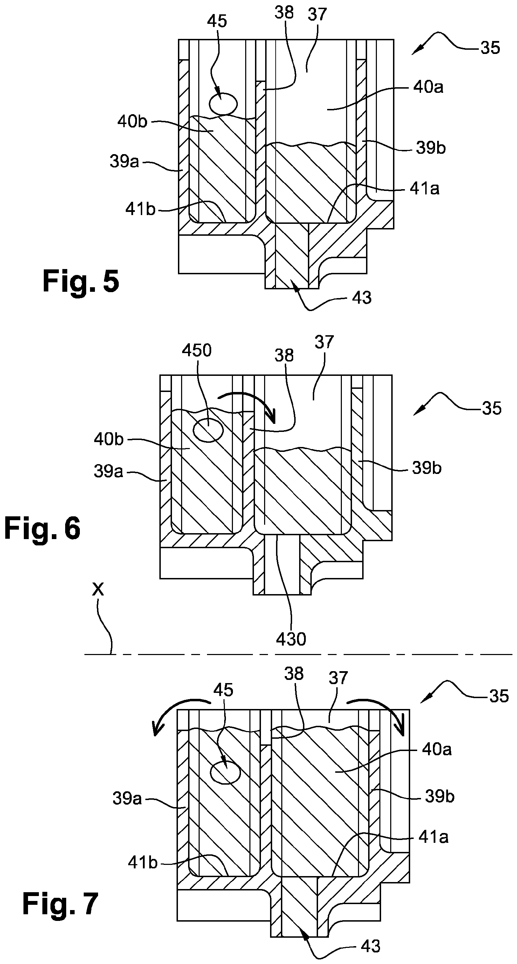

Ainsi, un débordement de lubrifiant va pouvoir avoir lieu dans le rouet, parallèlement à l'axe X, de la première sous-cavité dans la seconde, et inversement (flèche figure 6).

On va en outre disposer d'un réducteur de vitesse à pignons (11;12...) et d'un dispositif alimentation en huile d'un tel ensemble de pignons engrenant les uns sur les autres en étant mobiles en rotation autour de leur axe commun X, ledit dispositif comprenant en particulier :
- le réservoir 31 d'huile de lubrification,
- la canalisation fixe 32 d'amenée de l'huile au niveau des pignons,
- les canalisations 45,45a,45b d'acheminement de l'huile au niveau des engrenages tournants, ces canalisations d'acheminement étant donc mobiles en rotation autour de l'axe X de façon à suivre le mouvement desdits engrenages,
- le moyen d'éjection de l'huile 33 à l'extrémité de la canalisation 32,
- et le rouet 35, mobile en rotation autour du même axe X et positionné donc en regard dudit moyen d'éjection 33, pour recevoir l'huile.

On aura noté l'intérêt à ce que ce moyen 33 soit orienté avec une composante radiale dirigée en éloignement de l'axe X, afin d'alimenter favorablement les sous-cavités axialement étagées 40a,40b.

On notera aussi que les turbomachines modernes, notamment les turboréacteurs double flux, sont classiquement réalisées par un assemblage de modules qui peuvent comporter des parties fixes et des parties mobiles. Un module est défini comme un sous-ensemble d'une turbomachine dont les interfaces avec les modules adjacents présentent des caractéristiques géométriques suffisamment précises pour qu'il puisse être livré individuellement. L'assemblage de tels modules permet de constituer un moteur complet, en réduisant au maximum les opérations d'équilibrage et d'appariement des pièces en interface.

Un tel module est ici réalisable, avec son arbre fan 4 entraîné par un réducteur de vitesse du type pré-décrit.

Avec le rouet mobile 35 précité, il va en outre être possible de réaliser un équilibre débit-pression dans les sous-cavités, les gicleurs et les paliers étant alimentés en pression et le rouet étant entraîné en rotation, de sorte que se crée une pression centrifuge dans la cavité 37 en fonction de la vitesse de rotation du rouet et de la hauteur de la(des) colonne(s) d'huile dans cette cavité.

Pour assurer le fonctionnement du dispositif associé d'alimentation en huile on alimente en huile les sous-cavités 40a,40b du rouet via le moyen 33 de sorte qu'une répartition initiale d'huile lubrifiante s'opère dans la cavité 37 par l'intermédiaire de la cloison 38, un (ou a priori deux) niveau(x) d'huile 47a,47b se créant en conséquence dans lesdites sous-cavités (voir figure 5).

Dans une situation le nécessitant, comme lors d'une montée ou d'un décollage, on va même suralimenter l'une de ces sous-cavités, comme celle repérée 40b figure 6, jusqu'à faire déborder l'huile dans la sous-cavité adjacente, parallèlement à l'axe X, par-dessus la cloison 38. La pression nécessaire pour évacuer le débit d'huile est alors supérieure à la pression rouet plein (situation de la figure 5).

Le débit de la sous-cavité en débordement n'augmente alors plus. Par contre, le débit de la sous-cavité 40a continue d'augmenter. La répartition entre les sections d'alimentation est donc modifiée. Si les deux sous-cavités sont en débordement, le rouet déborde vers l'extérieur (figure 7).

A noter qu'une alternative à une cloison interne 38 plus courte, comme figures 5-7, aurait pu être de rehausser cette cloison et de créer à travers ladite cloison interne, typiquement à l'endroit du rayon R2, des passages pour l'huile permettant le débordement d'une des sous-cavités 40a,40b vers l'autre, à l'endroit de cette ladite cloison interne.

## Revendications

1. Rouet de distribution d'un lubrifiant dans une turbomachine, le rouet présentant un axe (X) autour duquel s'étend une cavité annulaire (37) :
- ouverte radialement vers l'axe,
- limitée latéralement par une première et une seconde parois (39a,39b) sensiblement radiales audit axe, pour recevoir le lubrifiant,
- d'où partent au moins des premières et des secondes canalisations (43,45) d'alimentation en lubrifiant de divers organes à lubrifier,
- et qui, parallèlement audit axe, est scindée en au moins une première et une seconde sous-cavités (40a,40b) annulaires, lesquelles:
-- sont séparées par une cloison (38) interne annulaire sensiblement radiale audit axe,
-- et communiquent avec les premières et secondes canalisations (43,45), respectivement,
**caractérisé en ce que** la cavité annulaire (37) présente une capacité de débordement à l'endroit de la cloison (38) interne, de sorte qu'un débordement de lubrifiant peut avoir lieu, parallèlement audit axe, de la première sous-cavité dans la seconde, et inversement, sans qu'il y ait alors débordement à l'endroit des première et seconde parois (39a,39b).

2. Rouet selon la revendication 1 où, radialement audit axe :
- les première et seconde sous-cavités (40a,40b) présentent chacune un fond (41a,41b),
- et la cloison interne (38) présente, par rapport à chaque fond, une hauteur inférieure à celle(s) des première et seconde parois.

3. Dispositif d'alimentation en huile d'un ensemble de pignons (11, 12, 13) engrenant les uns sur les autres en étant mobiles en rotation autour d'un axe de rotation commun (X), ledit dispositif comprenant :
- un réservoir (31) d'huile de lubrification,
- au moins une canalisation fixe d'amenée de l'huile (32) au niveau dudit ensemble et des canalisations d'acheminement de l'huile au niveau des engrenages tournants, lesdites canalisations d'acheminement étant également mobiles en rotation autour de l'axe de rotation commun (X),
- au moins un moyen d'éjection de l'huile (33) à l'extrémité de la canalisation fixe d'amenée (32),
**caractérisé en ce qu'**il comprend en outre un rouet (35) selon l'une des revendications précédentes, mobile en rotation autour dudit axe de rotation commun (X) et positionné en regard dudit moyen d'éjection (33), pour recevoir l'huile.

4. Réducteur de vitesse à train épicycloïdal adapté à tourner autour d'un axe de rotation (X) et comprenant :
- un ensemble de pignons (11, 12, 13) engrenant les uns sur les autres en étant mobiles en rotation autour d'un axe de rotation commun (X), et
- le dispositif d'alimentation en huile selon la revendication 3 ou le rouet (35) selon la revendication 1 ou 2.

5. Réducteur de vitesse selon la revendication 4, où l'extrémité libre de la cloison interne (38) est plus éloignée de l'axe de rotation (X) que celle(s) les première et seconde parois latérales (39a,39b) du rouet.

6. Module de soufflante d'un turboréacteur double flux comprenant un arbre fan (4) entraîné par un réducteur de vitesse selon la revendication 4 ou 5.

7. Turbomachine comportant au moins un réducteur de vitesse selon l'une des revendications 4,5 ou un module de soufflante selon la revendication 6.

8. Procédé de fonctionnement du dispositif d'alimentation en huile selon la revendication 3, suivant lequel :
- on alimente en huile la cavité annulaire du rouet (37) via le moyen d'éjection d'huile (33) de sorte qu'une répartition initiale d'huile lubrifiante s'opère dans la cavité du rouet par l'intermédiaire de la cloison interne, et un ou des niveau(x) d'huile se crée(nt) en conséquence dans lesdites première et seconde sous-cavités (40a,40b),
- une suralimentation d'une desdites première et seconde sous-cavités intervient jusqu'à faire déborder l'huile à l'endroit de la cloison interne (38), dans l'autre desdites première et seconde sous-cavités du rouet.

9. Procédé selon la revendication 8 où on poursuit une suralimentation d'au moins une desdites première et seconde sous-cavités (40a,40b) jusqu'à les faire déborder vers l'extérieur du rouet.

10. Procédé selon la revendication 8 ou 9 où, pour alimenter et suralimenter en huile la cavité annulaire (37) du rouet, on entraîne en rotation le rouet et on crée une pression centrifuge dans la cavité en fonction de la vitesse de rotation du rouet (35) et de la hauteur de la colonne d'huile dans ladite cavité.

## Patentansprüche

1. Laufrad zur Abgabe eines Schmiermittels in einer Turbomaschine bzw. einem Triebwerk, wobei das Laufrad eine Achse (X) aufweist, um die sich ein ringförmiger Hohlraum (37) erstreckt, der
- radial zur Achse hin offen ist,
- seitlich durch eine erste und eine zweite Wand (39a, 39b) begrenzt ist, die im Wesentlichen radial zu der Achse verlaufen, um das Schmiermittel aufzunehmen,
- von wo zumindest erste und zweite Leitungen (43, 45) zum Versorgen verschiedener zu schmierender Glieder mit Schmierstoff ausgehen,
- und der parallel zu der Achse in zumindest einen ersten und einen zweiten ringförmigen Teilhohlraum (40a, 40b) unterteilt ist, die
-- durch eine ringförmige innere Trennwand (38) getrennt sind, die im Wesentlichen radial zu der Achse verläuft,
-- und mit den ersten bzw. zweiten Leitungen (43, 45) kommunizieren, **dadurch gekennzeichnet, dass**
der ringförmige Hohlraum (37) eine Überlaufkapazität an der Stelle der inneren Trennwand (38) aufweist, so dass ein Überlauf von Schmiermittel parallel zu der Achse vom ersten in den zweiten Teilhohlraum und umgekehrt auftreten kann, ohne dass dabei ein Überlauf an der Stelle der ersten und der zweiten Wand (39a, 39b) auftritt.

2. Laufrad nach Anspruch 1, wobei radial zu der Achse
- der erste und der zweite Teilhohlraum (40a, 40b) jeweils einen Boden (41a, 41b) aufweisen,
- und die innere Trennwand (38) bezüglich jeden Bodens eine Höhe aufweist, die geringer als die der ersten und der zweiten Wand ist.

3. Vorrichtung zum Versorgen einer Anordnung von Zahnrädern (11, 12, 13) mit Öl, die aneinander kämmen und dabei um eine gemeinsame Drehachse (X) drehbeweglich sind, wobei die Vorrichtung enthält:
- einen Schmierölspeicher (31),
- zumindest eine feste Leitung (32) zum Zuführen von Öl in den Bereich der genannten Anordnung und Leitungen zum Fördern des Öls in den Bereich der drehenden Zahnräder, wobei die Förderleitungen auch um die gemeinsame Drehachse (X) drehbeweglich sind,
- zumindest eine Einrichtung zum Ausstoßen von Öl (33) am Ende der festen Zuführleitung (32),
**dadurch gekennzeichnet, dass**
sie ferner ein Laufrad (35) nach einem der vorangehenden Ansprüche enthält, das um die gemeinsame Drehachse (X) drehbeweglich ist und der Ausstoßeinrichtung (33) gegenüberliegend angeordnet ist, um das Öl aufzunehmen.

4. Untersetzungsgetriebe mit Planetengetriebe, das dazu geeignet ist, um eine Drehachse (X) zu drehen und enthält:
- eine Anordnung von Zahnrädern (11, 12, 13), die aneinander kämmen und dabei um eine gemeinsame Drehachse (X) drehbeweglich sind, und
- die Vorrichtung zur Ölversorgung nach Anspruch 3 bzw. das Laufrad (35) nach Anspruch 1 oder 2.

5. Untersetzungsgetriebe nach Anspruch 4,
wobei
das freie Ende der inneren Trennwand (38) weiter von der Drehachse (X) entfernt ist als das bzw. die der ersten und der zweiten Seitenwand (39a, 39b) des Laufrads.

6. Bläsermodul für ein Zweistrom-Strahltriebwerk, enthaltend eine Fan-Welle (4), die über ein Untersetzungsgetriebe nach Anspruch 4 oder 5 angetrieben wird.

7. Turbomaschine bzw. Triebwerk mit zumindest einem Untersetzungsgetriebe nach einem der Ansprüche 4, 5 oder einem Bläsermodul nach Anspruch 6.

8. Verfahren zum Betreiben der Ölversorgungsvorrichtung nach Anspruch 3, bei dem
- der ringförmige Hohlraum des Laufrads (37) über die Ölausstoßeinrichtung (33) mit Öl versorgt wird, so dass eine anfängliche Verteilung von Schmieröl in dem Hohlraum des Laufrads über die innere Trennwand erfolgt und ein oder mehrere Ölpegel sich in der Folge in dem ersten und dem zweiten Teilhohlraum (40a, 40b) bilden,
- eine Überversorgung eines aus erstem und zweitem Teilhohlraum auftritt, bis das Öl an der Stelle der inneren Trennwand (38) zum Überlaufen in den anderen aus erstem und zweitem Teilhohlraum des Laufrads gebracht wird.

9. Verfahren nach Anspruch 8,
wobei
eine Überversorgung zumindest eines aus erstem und zweitem Teilhohlraum (40a, 40b) bis zum Überlaufen nach außerhalb des Laufrads fortgesetzt wird.

10. Verfahren nach Anspruch 8 oder 9,
wobei
zum Versorgen und Überversorgen des ringförmigen Hohlraums (37) des Laufrads mit Öl das Laufrad drehend angetrieben wird und ein Zentrifugaldruck in dem Hohlraum in Abhängigkeit von der Drehzahl des Laufrads (35) und von der Höhe der Ölsäule in dem Hohlraum erzeugt wird.

## Claims

1. Lubricant wheel of a turbine engine, wherein the wheel has an axis (X) around which extends an annular cavity (37):
- which opens radially towards the axis,
- which is laterally bordered by a first wall and a second wall (39a, 39b) which are substantially radial to said axis, to receive the lubricant,
- from which at least first and second lubricant supply lines (43, 45) depart for lubricating various members to be lubricated,
- and which, parallel to said axis, is split into at least a first annular sub-cavity and a second annular sub-cavity (40a, 40b), which:
-- are separated by an annular inner partition (38) substantially radial to said axis,
-- and communicate with the first and second lines (43, 45), respectively,
**characterised in that** the annular cavity (37) has an overflow capacity at the location of the inner partition (38), so that an overflow of lubricant can take place, parallel to said axis, from the first sub-cavity into the second sub-cavity and vice versa, without any overflow over the first wall and the second wall (39a, 39b).

2. Wheel according to claim 1, wherein, radially relative to said axis:
- the first and second sub-cavities (40a, 40b) each have a bottom (41a, 41b),
- and the inner partition (38) has, with respect to each bottom, a height less than the height(s) of the first and second walls.

3. Oil supply device of an assembly of pinions (11, 12, 13) meshing on each other while rotating around a common axis of rotation (X), wherein said device comprises:
- a lubricating oil tank (31),
- at least one fixed line (32) to supply oil to said assembly, and other lines to supply oil to the rotating meshing pinions, said other supply lines being movable in rotation around the common axis of rotation (X),
- at least one means (33) for ejecting oil at the end of the fixed supply line (32),
**characterised in that** it further comprises a wheel (35) according to any of the preceding claims, movable in rotation around said common axis of rotation (X) and positioned opposite said ejection means (33), in order to receive the oil.

4. Epicyclic speed reduction gear adapted to rotate around an axis of rotation (X) and comprising:
- an assembly of pinions (11, 12, 13) meshing on each other while rotating around a common axis of rotation (X), and
- the oil supply device according to claim 3, or the wheel (35) according to claim 1 or 2.

5. Speed reduction gear according to claim 4, wherein the free end of the inner partition (38) is more distant from the axis of rotation (X) than that/those of the first and second lateral walls (39a, 39b) of the wheel.

6. Dual-flow turbojet fan module comprising a fan shaft (4) driven by a speed reduction gear according to claim 4 or 5.

7. Turbine engine comprising at least one speed reduction gear according to any of claims 4, 5 or a fan module according to claim 6.

8. Method of operation of the oil supply device according to claim 3, according to which:
- oil is supplied to the annular cavity of the wheel (37) via the oil ejection means (33) such that an initial distribution of lubricating oil occurs in the cavity of the wheel by means of the inner partition, and an oil level or oil levels is/are thus created in said first and second sub-cavities (40a, 40b),
- an oversupply of one of said first and second sub-cavities occurs until the oil overflows at the location of the inner partition (38), into the other of said first and second sub-cavities of the wheel.

9. Method according to claim 8 wherein the oversupply of at least one of said first and second sub-cavities (40a, 40b) is continued until overflow towards the outside of the wheel.

10. Method according to claim 8 or 9, wherein for supplying and oversupplying the annular cavity (37) of the wheel with oil, the wheel is rotated and a centrifugal pressure is created in the cavity as a function of the rotation speed of the wheel (35) and the height of the oil column in said cavity.
